# EUROPÄISCHE PATENTSCHRIFT

(11) **EP 1 297 991 B1**
(45) Veröffentlichungstag und Bekanntmachung des Hinweises auf die Patenterteilung: **22.08.2007**
(21) Anmeldenummer: 02102275.1
(22) Anmeldetag: 03.09.2002
(51) Int. Cl.: B60W 10/02, B60W 10/06, B60W 10/10, F16H 59/44

(54) **Steuerungsverfahren und -system für einen Kraftfahrzeug-Antriebsstrang**
Control method and system for a vehicle drive train
Procédé et système de commande de chaîne de traction d'une automobile

(30) Priorität: 28.09.2001 DE 10147982
(43) Veröffentlichungstag der Anmeldung: 02.04.2003
(73) Patentinhaber: SIEMENS AKTIENGESELLSCHAFT, 80333 München (DE)
(72) Erfinder: Hirsch, Thomas, 93109 Wiesent (DE)

(56) Entgegenhaltungen:
- DE-A1- 19 932 052
- DE-A1- 19 937 052

## Beschreibung

Die Erfindung betrifft ein Verfahren nach dem Oberbegriff von Anspruch 1 und eine nach diesem Verfahren arbeitende Steuerung. Der Kraftfahrzeug-Antriebsstrang schließt ein einen Motor, eine Motorsteuerung, ein Getriebe, eine Getriebesteuerung und ein automatisch betätigtes Anfahr- und Schaltelement, insbesondere in Form einer Kupplung. Bei diesem Verfahren werden während eines Kriech- oder Anfahrbetriebs des Kraftfahrzeugs die Getriebedrehzahlen erfasst.

Die üblichen Drehzahl- und Geschwindigkeitssensoren in Kraftfahrzeugen können zwischen den beiden möglichen Drehrichtungen des Antriebs nicht unterscheiden und ermöglichen damit auch kein Erkennen der Roll- oder Fahrtrichtung des Kraftfahrzeugs. Die Rollrichtung eines Fahrzeuges ist jedoch von entscheidender Bedeutung für viele Funktionen einer Antriebsstrangsteuerung. Beispiele sind der Wechsel zwischen Vorwärts- und Rückwärtsgängen beim Schalten des Getriebes sowie Anfahrvorgänge und Kriechbewegungen. Soll ein Kraftfahrzeug anfahren, so muss die Kupplung mit verschiedener Geschwindigkeit zum Eingriff gebracht werden, wenn das Kraftfahrzeug etwa an einer Gefällstrecke schon vorwärts rollt und wenn es an einer Steigung unbeabsichtigt etwas rückwärts rollt.

Um die Rollrichtung anhand von Sensorsignalen erkennen zu können, müssten besondere Sensoren, zum Beispiel mit einem Impulsring mit asymmetrischer Verzahnung, verwendet werden, und dies wäre recht kostspielig. Dieser Nachteil ist bereits in der Druckschrift DE 42 29 024 C2 erkannt worden, in der ein Verfahren zum Begrenzen der Rollbewegung eines Fahrzeuges bei Ruhestellung des Fahrpedals beschrieben wird. Bei stei gender Drehzahl am Getriebeeingang wird eine Kupplung zugestellt, und bei Unterschreiten einer Motordrehzahl (Abwürgdrehzahl) wird sie wieder aufgestellt. Dies führt einerseits zu einer Warnung des Fahrers und meistens auch zu einer Verzögerung des Kraftfahrzeugs.

Bei dem bekannten Verfahren wird beim Unterschreiten der Motordrehzahl unter eine unter der Leerlaufdrehzahl liegende, zweite Drehzahlschwelle eine Rollbewegung entgegengesetzt der Bewegungsrichtung erkannt, die dem jeweils eingelegten Gang des Schaltgetriebes entspricht, und es wird dann in einen gesonderten Ein- und Ausrückmodus geschaltet. Diese Erkennung funktioniert bei geringen Geschwindigkeiten prinzipbedingt nicht zuverlässig. Bei sich bewegendem Kraftfahrzeug muss die Kupplung mit einer speziellen Steuerfunktion geschlossen werden, um über ein Herunterdrücken der Motordrehzahl eine falsche Rollrichtung zu erkennen.

Bei einem gattungsbildenden Verfahren wird die Drehrichtung einer Abtriebswelle eines automatisierten Getriebes beim Anrollen eines Kraftfahrzeuges mit einer Standabkoppelung eines Antriebsstranges erkannt (DE 199 37 052 A1). Ein Drehzahlsensor gibt ein von einem Geberrad bei Rotation der Abtriebswelle erzeugtes Signal an eine elektronische Getriebesteuerung aus. Ein zeitabhängiges Verhalten einer ermittelten Getriebeabtriebsdrehzahl wird mit zugehörigen, für einen Fahrzustand in Vorwärtsfahrt oder Rückwärtsfahrt charakteristischen Kenngrößen zum Erkennen des Fahrzustandes verglichen, wobei eine Synchronpunktberechnung abhängig von dem erkannten Fahrzustand durchgeführt wird.

Der Erfindung liegt die Aufgabe zugrunde, ein Verfahren zum Steuern eines Antriebsstrangs und eine Antriebsstrangsteuerung zu schaffen, die ein Erkennen der Rollrichtung eines Kraftfahrzeugs ohne zusätzlichen baulichen Aufwand und zuver lässig auch bei kleinen Fahrzeuggeschwindigkeiten ermöglichen.

Die Aufgabe der Erfindung wird durch ein Verfahren nach Anspruch 1 und durch eine Antriebsstrangsteuerung nach Anspruch 8 gelöst. Während eines Kriech betriebs des Kraftfahrzeugs werden das Motordrehmoment und die Motordrehzahl erfasst, die Drehzahlen des Motors und des Getriebes verglichen und ausschließlich aus diesen Daten wird die Rollrichtung des Kraftfahrzeugs ermittelt.

Zweckmäßige Weiterbildungen der Erfindung sind in den Unteransprüchen niedergelegt.

Die Vorteile der Erfindung liegen insbesondere darin, dass ein Erkennen der Rollrichtung nahezu aus dem Stillstand des Kraftfahrzeugs erfolgt. Spezifische Aktionen der Kupplung zum Erkennen der Rollrichtung sind nicht notwendig, da bei einem Kriechen die Kupplung schon in dem erforderlichen Maße zugestellt wird. Die Erkennung geschieht nur aus dem Motoristmomentverlauf in Verbindung mit den Drehzahlverläufen von Getriebe und Motor. Sobald die Getriebedrehzahl über die Motordrehzahl steigt, stellt sich entweder ein Motorschubmoment ein (bei richtiger Rollrichtung) oder ein Motorzugmoment bleibt erhalten (im Falle einer falschen Rollrichtung). Die Erkennung erfolgt in einem bezogen auf Sicherheitsaspekte und Materialverschleiß unkritischen Geschwindigkeitsbereich des Kraftfahrzeugs.

Ausführungsbeispiele der Erfindung werden im Folgenden anhand der Zeichnungen erläutert. Es zeigen:
- Figur 1: ein schematisch dargestellter Antriebsstrang eines Kraftfahrzeugs, das mit einer Antriebsstrangsteuerung versehen ist, in der das erfindungsgemäße Verfahren durchgeführt wird;
- Figur 2: ein Blockschaltbild einer erfindungsgemäßen Antriebsstrangsteuerung;
- Figur 3: den qualitativen zeitlichen Verlauf des bei dem erfindungsgemäßen Verfahren beobachteten Motordrehmoments;
- Figur 4: den qualitativen zeitlichen Verlauf eines bei dem erfindungsgemäßen Verfahren vorhandenen Fahrwiderstands;
- Figur 5: den qualitativen zeitlichen Verlauf des bei dem erfindungsgemäßen Verfahren beobachteten Drehzahlverlaufs, und
- Figur 6: ein Ablaufdiagramm eines bei dem erfindungsgemäßen Verfahren abgearbeiteten Programms.

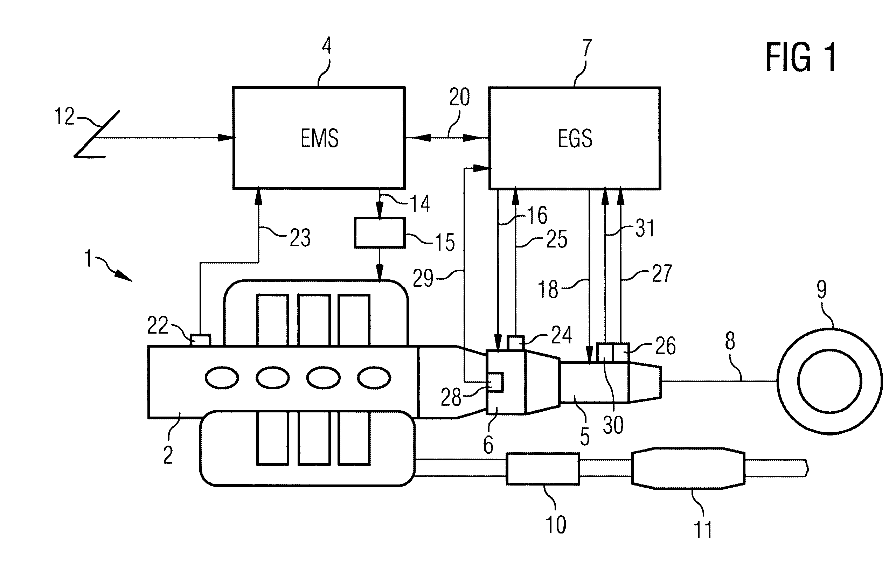

Ein Antriebsstrang 1 (Figur 1) eines Kraftfahrzeugs schließt ein: einen Motor 2 mit einer elektronischen Motorsteuerung (abgekürzt: EMS) 4, ein automatisches Getriebe 5 mit einem Anfahr- und Schaltelement 6 und einer elektronischen Getriebesteuerung 7. Der Radantrieb ist durch eine Gelenkwelle 8 und ein angetriebenes Rad 9 angedeutet, die Abgasanlage durch einen Katalysator 10 und einen Schalldämpfer 11.

Der Motor 2 kann als Verbrennungsmotor, als Elektromotor oder als Hybridantrieb, der aus einem Verbrennungs- und einem Elektromotor besteht, ausgeführt sein. Das Anfahr- und Schaltelement 6 kann aus einem Drehmomentwandler mit einer Überbrückungskupplung, einer automatisch betätigten Kupplung oder aus einer automatischen Doppelkupplung bestehen. Im folgenden wird es auch als Kupplung 6 bezeichnet.

Über ein Gaspedal 12 übermittelt der Fahrer seine Wünsche an die Motorsteuerung 4, die ihrerseits den Motor entsprechend steuert. Angedeutet ist das durch eine Signalleitung 14, die zu einem Motorsteuerglied 15 führt. Dieses kann steuern: eine Drosselklappe, den Zündzeitpunkt, den Einspritzzeitpunkt und die in den Motor eingespritzte Kraftstoffmenge und/oder die Aufladung. Dies ist im einzelnen hier nicht dargestellt, da die Möglichkeiten zur Motorsteuerung für sich bekannt sind.

Die Getriebesteuerung 7 steuert über eine Signalleitung 16 die Kupplung 6 und über eine Signalleitung 18 die Übersetzung des Getriebes 5. Die Motorsteuerung 4 und die Getriebesteuerung 7 sind durch bidirektionale Signal- und Steuerleitungen 20, zum Beispiel in Form eines Datenbusses, miteinander verbunden und tauschen über diese Datenleitungen Informationen aus, die für einen komfortablen und ökonomischen Fahrbetrieb des Kraftfahrzeugs nötig sind.

Ein erster Drehzahlsensor 22 erfasst die Motordrehzahl und übermittelt sie über eine Signalleitung 23 an die Motorsteuerung 4. Ein zweiter Drehzahlsensor 24 erfasst die Ausgangsdrehzahl der Kupplung, die der Eingangsdrehzahl des Getriebes entspricht, und übermittelt sie über eine Signalleitung 25 an die Getriebesteuerung 7. Ein dritter Drehzahlsensor 26 erfasst die Ausgangsdrehzahl des Getriebes 5, die proportional zur Fahrzeuggeschwindigkeit ist, und übermittelt sie über eine Signalleitung 27 ebenfalls an die Getriebesteuerung 7.

Ein erster Positionssensor 28 erfasst die Position der Kupplung 6 und übermittelt sie über eine Signalleitung 29 an die Getriebesteuerung 7. Aus dieser Position ergibt sich bei Kenntnis der Kupplungscharakteristik die Drehmomentkapazität der Kupplung 6. Diese Drehmomentkapazität kann alternativ auch mit einem Drucksensor erfasst werden.

Ein zweiter Positionssensor 30, erforderlichenfalls auch mehr als ein Positionssensor, erfasst die Schaltposition in dem Getriebe 5 und übermittelt sie über eine Signalleitung 31 an die Getriebesteuerung 7. Auch die Schaltposition kann alternativ mit Drucksensoren erfasst werden.

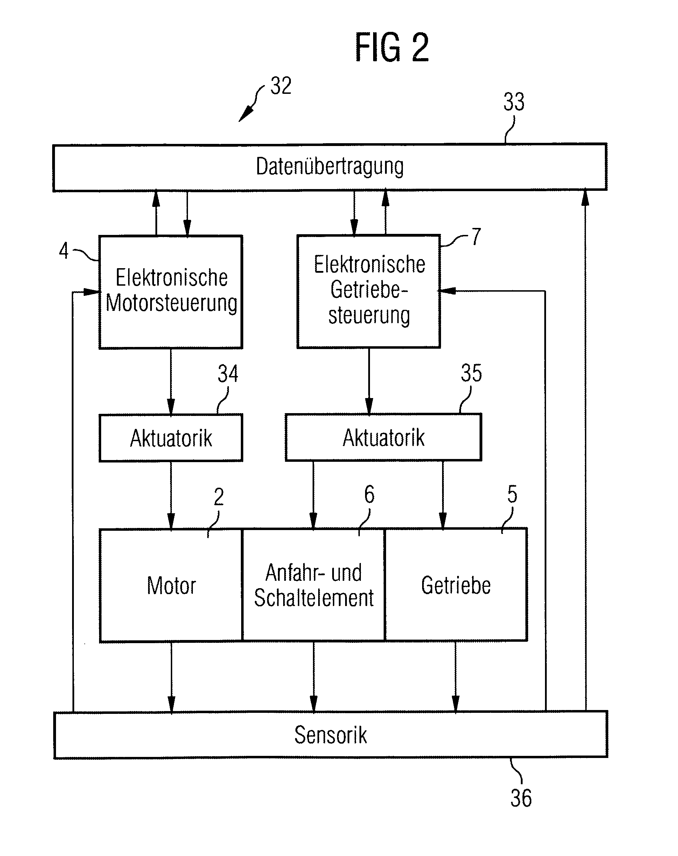

Die aus Figur 2 ersichtliche Antriebsstrangsteuerung 32 enthält eine Datenübertragungseinrichtung 33, die zum Beispiel als Bussystem ausgebildet ist und auch mehrere aus der Zeichnung ersichtliche Signal- und Steuerleitungen einschließt. Sie verbindet die weiteren Bestandteile der Antriebsstrangsteuerung: die elektronische Motorsteuerung 4, den Motor 2 und die diese beiden Blöcke miteinander verbindenden Aktoren, die zu einem ersten Block Aktuatorik 34 zusammengefasst sind. Die elektronische Getriebesteuerung 7 ist durch Aktoren eines zweiten Blocks Aktuatorik 35 mit dem Anfahr- und Schaltelement 6 und mit dem Getriebe 5 verbunden. Mehrere Sensoren, die anhand von Figur 1 bereits aufgeführt worden sind und die die Betriebsgrößen des Antriebsstrangs 1 erfassen, sind zu einem Block Sensorik 36 zusammengefasst. Zusätzlich werden darin Informationen von - hier nicht dargestellten - Sensoren, die verschiedenen Aktuatoren der Motorsteuerung und der Getriebesteuerung zugeordnet sind, erfasst.

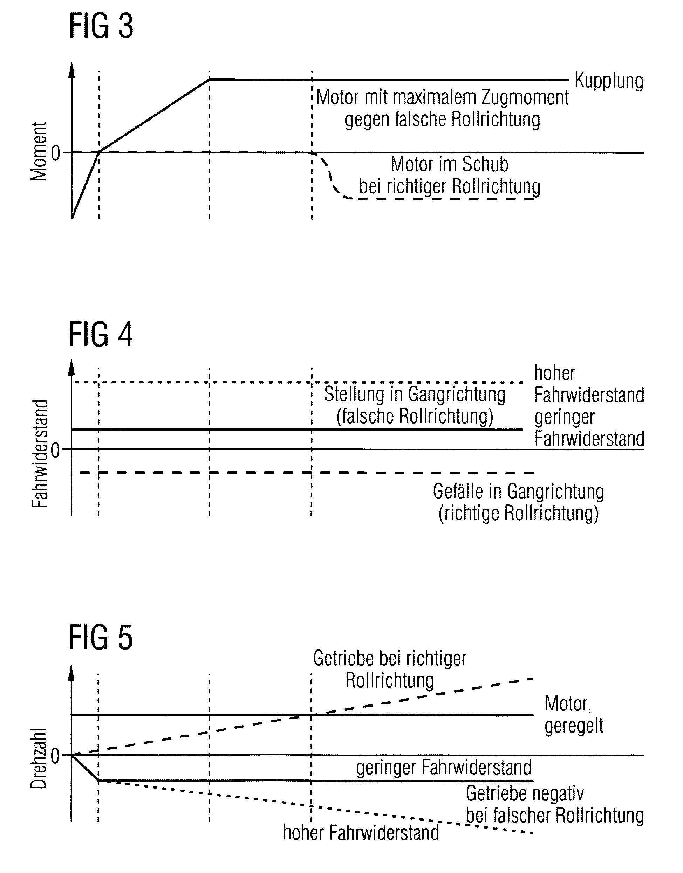

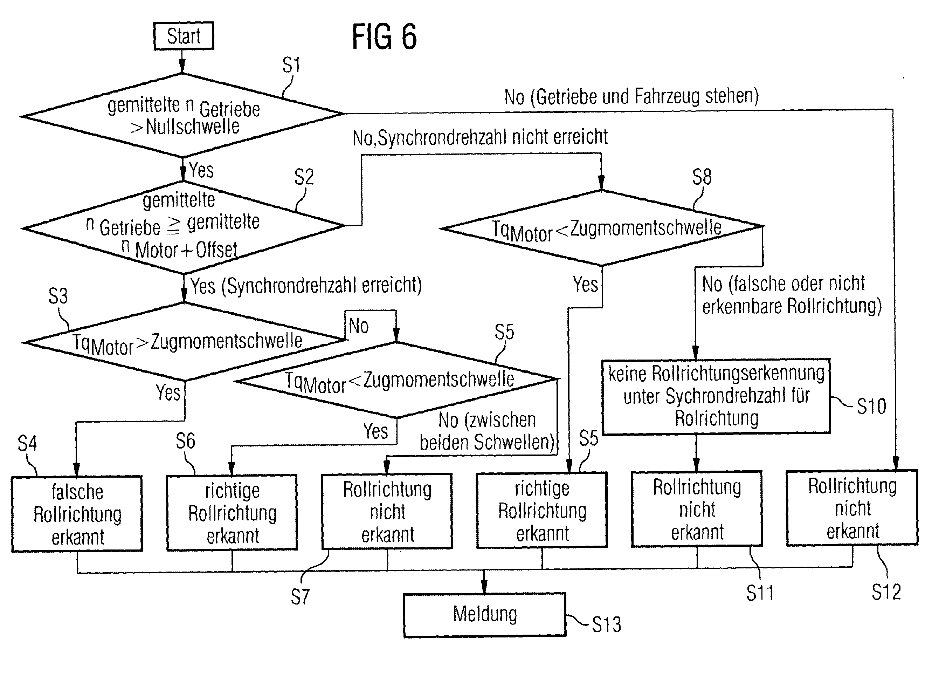

Anhand des beobachteten Motordrehmoments (Figur 3), des Fahrwiderstands (Figur 4) und der Motor- und der Getriebedrehzahl (Figur 5) bei eingelegtem Kriechgang oder bei einem Anfahren des Kraftfahrzeugs an einer Steigung oder an einem Gefälle wird nun die erfindungsgemäße Unterscheidung der richtigen (das heißt von der Antriebsstrangsteuerung 28 beabsichtigten) Rollrichtung und der falschen (das heißt unbeabsichtigten) Rollrichtung erläutert. Die einzelnen Zustandsgrößen und Fahrzustände sind in den Figuren explizit bezeichnet. Abszisse der drei Diagramme ist die Zeit.

Falsche Rollrichtung: Bei einem geringem Fahrwiderstand stagniert die Getriebedrehzahl oder steigt nur sehr langsam an, da bei dem Bestreben die Motordrehzahl herabzudrücken das von der Motorsteuerung (insbesondere deren Motordrehzahlregler) geregelte Motorzugmoment den Fahrwiderstand annähernd ausgleicht. Bei einem größerem Fahrwiderstand liefert selbst das maximale von der Motorsteuerung eingestellte Motormoment nicht ausreichend Antriebsmoment, um die Getriebedrehzahl zu vermindern. Sie steigt betragsmäßig immer weiter, auch über die Motordrehzahl hinaus, obwohl das maximal begrenzte Motorzugmoment unverändert anliegt. Eine solche Drehmomentbegrenzung ist insbesondere bei drehmomentstarken Motoren (unter anderem Dieselmotoren) notwendig. Der Fahrer kann bei einer starken Steigung nicht erwarten, nur mit Nutzung der Kriechfunktion den Berg zu erklimmen. Eine Fahrpedalaktivierung wird erforderlich, verbunden mit einem Wechsel in eine aktive Anfahraktion.

Richtige Rollrichtung: Bei einem negativem Fahrwiderstand hat der Motor kein Drehmoment zu liefern, um die Drehzahl zu halten; die Drehzahl würde sonst durchgehen. Deshalb liefert der Motor annähernd ein Nullmoment und spätestens ab einem Überschreiten der Motordrehzahl durch die Getriebedrehzahl ein Schubmoment.

Bei einem Fahren in der Ebene (das heißt in der Horizontalen), das in der Zeichnung nicht dargestellt ist, arbeitet der Motordrehzahlregler nach Bedarf: Das Motormoment wird geregelt, um die Kriechfunktion bedarfsgerecht mit Antriebsmoment zu versorgen. Eine vorgegebene maximale Geschwindigkeit und/oder ein vorgegebenes maximales Kriechmoment begrenzen die Kriechfunktion.

Zusammenfassend ergibt sich folgendes: Die Rollrichtung wird allein aus dem Motoristmoment in Verbindung mit dem Drehzahlzustand von Getriebe und Motor erkannt. Spätestens wenn die Getriebedrehzahl die Motordrehzahl übersteigt, stellt sich entweder ein Motorschubmoment ein bei richtiger Rollrichtung oder das Motorzugmoment bleibt erhalten bei falscher Rollrichtung.

Zum Abarbeiten des aus Figur 6 ersichtlichen Programms müssen folgende Voraussetzungen erfüllt sein:
Die Fahrzeuggeschwindigkeit V_{Fahrzeug} muss bei einem Eintritt in die Kriechfunktion unter einer Nullschwelle liegen, die etwa ±3 km/h beträgt. (Aus höheren Geschwindigkeiten ab etwa 20 km/h wird die Rollrichtung aus einem definierten Schließen der Kupplung und den sich daraus ergebenden Effekten auf die Drehzahlen n_{Motor} und n_{Getriebe} erkannt.)
Der Motor läuft mit einer minimalen Drehzahl, der Leerlaufdrehzahl n_{Leerlauf}.
Die Motordrehzahl-, Getriebedrehzahl- und Kupplungsposition-Sensoren liefern fehlerfreie Signale.
Die Kupplung ist nicht offen (das heißt es erfolgt ein Kriechen mit einem Drehmoment an der Kupplung Tq_{Kupplung} größer als eine Nullschwelle).
Es liegt kein Fahrerwunsch vor (das heißt die Auslenkung des Fahrpedals liegt unter einer Nullschwelle).
Es ist ein Getriebegang eingelegt.

Das Programm (Figur 6) weist folgende Schritte auf:

### Nach einem

### Start wird In einem Schritt

- **S1:**: abgefragt, ob die gemittelte Getriebedrehzahl n_{Getriebe} über einer Nullschwelle liegt. Falls ja, wird in einem Schritt
- **S2:**: abgefragt, ob die gemittelte Getriebedrehzahl n_{Getriebe} größer oder gleich der Summe aus der gemittelten Motordrehzahl n_{Motor} und einem kalibrierbaren Offset ist. Falls ja, ist die Synchrondrehzahl des Getriebes erreicht und es wird in einem Schritt
- **S3:**: abgefragt, ob das Motordrehmoment Tq_{Motor} über einer Zugmomentschwelle liegt. Falls ja, wird in einem Schritt
- **S4:**: die Rollrichtung als falsch, das heißt entgegen der in der Getriebesteuerung vorgesehenen, erkannt und signalisiert. Falls nein, wird in einem Schritt
- **S5:**: abgefragt, ob Tq_{Motor} unter einer Schubmomentschwelle liegt. Falls ja, wird in einem Schritt
- **S6:**: die Rollrichtung als richtig erkannt und signalisiert. Falls nein, liegt Tq_{Motor} zwischen den beiden genannten Schwellen, und es wird die Rollrichtung nicht erkannt.
- Falls die Antwort auf die Abfrage in Schritt S2 nein ist, ist die Synchrondrehzahl des Getriebes nicht erreicht und es wird in einem Schritt
- **S8:**: abgefragt, ob das Motordrehmoment Tq_{Motor} unter einer Zugmomentschwelle liegt. Falls ja, wird in einem Schritt
- **S9:**: die Rollrichtung als richtig erkannt und signalisiert. Falls nein, liegt eine falsche oder nicht erkennbare Rollrichtung vor. In einem Schritt
- **S10:**: erfolgt unter der Synchrondrehzahl keine Rollrichtungserkennung für die falsche Rollrichtung, da sie nur von Bedeutung ist, wenn es dem Motor nicht gelingt, die Bewegungsrichtung des Kraftfahrzeugs umzukehren. In einem Schritt
- **S11:**: wird die Rollrichtung als nicht erkannt signalisiert.
- Falls die Antwort auf die Abfrage in dem Schritt S1 nein ist, stehen das Getriebe und das Kraftfahrzeug still. Es wird in einem Schritt
- **S12:**: die Rollrichtung als nicht erkannt signalisiert.
- Die in den Schritten S4, S6, S7, S9, S11 und S12 ermittelten Ergebnisse werden in einem Schritt
- **S13:**: gemeldet, und zwar an die Getriebesteuerung 7 oder an eine zentrale Richtungsüberwachung in der Getriebesteuerung 7, falls eine solche vorhanden ist.
- Falls ein Elektromotor im Antriebsstrang 1 an der Drehmomenterzeugung beteiligt ist, werden die ermittelten Ergebnisse auch an die Motorsteuerung 4 gemeldet.

Der in dem Schritt S2 erwähnte Offset stellt einen Zuschlagswert für die Drehzahl dar, von zum Beispiel 50-100 U/min, mit dem ein möglicher geringfügiger Drehzahlabfall des Motors beim Anfahren oder Schalten ausgeglichen werden kann. Er hängt von dem jeweiligen Motortyp ab, bei starken Motoren kann er gleich null sein.

Die vorstehend erwähnten Schwellwerte hängen von dem jeweiligen Kraftfahrzeugtyp ab. Typische Werte sind zum Beispiel für die Zugmomentschwelle 10 Nm und für die Schubmomentschwelle 0 Nm.

Die Richtungsüberwachung kann Bestandteil der Getriebesteuerung 7 sein. Sie erfüllt folgende Aufgaben: Sie gibt Anstoß zur Ermittlung der Rollrichtung, falls diese noch nicht ermittelt worden ist (zum Beispiel durch eine definierte Kupplungsbewegung). Sie gibt bei nicht mit dem eingelegten Getriebegang übereinstimmender Fahrzeugrollrichtung eine Warnung an den Fahrer ab. Sie speichert die ermittelten Rollrichtungswerte. Sie überprüft die Plausibilität von Schaltübergängen von einer Vor- in eine Rückwärtsfahrt und im Leerlauf. Sie erkennt einen Geschwindigkeits-Nulldurchgang (bei Erreichen der Nullschwelle) und veranlasst dann eine erneute Ermittlung der Rollrichtung.

Die Daten des zentralen Rollrichtungsbeobachters werden von den verschiedenen Steuereinrichtungen des Antriebsstrangs 1 verwertet, und diese versorgen ihn ihrerseits mit geeigneten Informationen.

## Patentansprüche

1. Verfahren zum Steuern eines Kraftfahrzeug-Antriebsstrangs, der einen Motor, eine Motorsteuerung, ein Getriebe, eine Getriebesteuerung und eine automatisch betätigte Kupplung einschließt,
- bei dem während eines Kriech betriebs des Kraftfahrzeugs die Motor- und die Getriebedrehzahlen erfasst werden, und die Drehzahlen des Motors und des Getriebes verglichen werden
**dadurch gekennzeichnet,**
- **dass** das Motordrehmoment erfasst wird
- und **dass** ausschließlich aus diesen Daten die Rollrichtung des Kraftfahrzeugs ermittelt wird.

2. Verfahren nach Anspruch 1, **dadurch gekennzeichnet, dass** spätestens nachdem ein Anstieg der Getriebedrehzahl über die Motordrehzahl erkannt worden ist,
- beim Auftreten eines Motorschubmoments eine richtige Rollrichtung festgestellt wird, die der von der Getriebesteuerung vorgesehenen Fahrtrichtung entspricht, und
- beim Erhaltenbleiben eines Motorzugmoments eine falsche Rollrichtung festgestellt wird, die der von der Getriebesteuerung vorgesehenen Fahrtrichtung entgegengesetzt ist.

3. Verfahren nach Anspruch 2, **dadurch gekennzeichnet, dass** die Rollrichtung festgestellt wird, spätestens nachdem ein Anstieg der Getriebedrehzahl über die Motordrehzahl zuzüglich eines Offsets erkannt worden ist.

4. Verfahren nach Anspruch 1, **dadurch gekennzeichnet,**
- **dass** geprüft wird, ob die gemittelte Getriebedrehzahl über einer Nullschwelle liegt, und wenn dies zutrifft,
- geprüft wird, ob die gemittelte Getriebedrehzahl größer oder gleich einer gemittelten Motordrehzahl zuzüglich eines Offsets ist,
- **dass** dann geprüft wird, ob das Motordrehmoment über einer Zugmomentschwelle liegt, und wenn dies zutrifft,
- erkannt wird, dass das Kraftfahrzeug in der falschen Fahrtrichtung rollt.

5. Verfahren nach Anspruch 1, **dadurch gekennzeichnet,**
- **dass** geprüft wird, ob die gemittelte Getriebedrehzahl über nach Anspruch 1, **dadurch gekennzeichnet,**
- **dass** geprüft wird, ob die gemittelte Getriebedrehzahl über einer Nullschwelle liegt, und wenn dies zutrifft,
- **dass** geprüft wird, ob die gemittelte Getriebedrehzahl größer oder gleich einer gemittelten Motordrehzahl ist,
- **dass** dann geprüft wird, ob das Motordrehmoment über einer Zugmomentschwelle liegt, und wenn dies nicht zutrifft,
- **dass** geprüft wird, ob das Motordrehmoment unter einer Schubmomentschwelle legt, und wenn dies nicht zutrifft,
- **dass** signalisiert wird, dass die Rollrichtung nicht erkannt worden ist.

6. Verfahren nach Anspruch 1, **dadurch gekennzeichnet,**
- **dass** geprüft wird, ob die gemittelte Getriebedrehzahl über einer Nullschwelle liegt, und wenn dies zutrifft,
- geprüft wird, ob die gemittelte Getriebedrehzahl größer oder gleich einer gemittelten Motordrehzahl zuzüglich eines Offsets ist,
- **dass** dann geprüft wird, ob das Motordrehmoment über einer Zugmomentschwelle liegt, und wenn dies nicht zutrifft,
- **dass** geprüft wird, ob das Motordrehmoment unter einer Schubmomentschwelle legt, und wenn dies zutrifft,
- erkannt wird, dass das Kraftfahrzeug in der richtigen Fahrtrichtung rollt.

7. Verfahren nach Anspruch 1, **dadurch gekennzeichnet,**
- **dass** geprüft wird, ob die gemittelte Getriebedrehzahl über einer Nullschwelle liegt, und wenn dies zutrifft,
- **dass** geprüft wird, ob die gemittelte Getriebedrehzahl größer oder gleich einer gemittelten Motordrehzahl ist,
- **dass** dann geprüft wird, ob das Motordrehmoment über einer Zugmomentschwelle liegt, und wenn dies nicht zutrifft,
- **dass** geprüft wird, ob das Motordrehmoment unter einer Schubmomentschwelle legt, und wenn dies nicht zutrifft,
- **dass** signalisiert wird, dass die Rollrichtung nicht erkannt worden ist.

8. Steuerung (1) für den Antriebsstrang eines Kraftfahrzeugs mit einem Motor, einem Getriebe und einer automatisch betätigten Kupplung, die versehen ist mit
- einer Motorsteuerung (2), durch die das Drehmoment des Motors beeinflussende Größen gesteuert werden,
- einer Getriebesteuerung (3), durch die die Schaltvorgänge des automatischen Getriebes gesteuert werden und die mit der Motorsteuerung (2) Daten austauscht, und
- Drehzahlsensoren zum Erfassen von Motor- und Getriebedrehzahlen,
**dadurch gekennzeichnet,**
- **dass** sie ein Anfahr- und Schaltelement (6) aufweist, mit dem eine Kriechfahrt des Kraftfahrzeugs gesteuert wird und von dem die Rollrichtung des Kraftfahrzeugs ausschließlich anhand des Motordrehmoments und von Vergleichen der Motordrehzahl und der Getriebedrehzahl ermittelt wird.

9. Steuerung nach Anspruch 8, **dadurch gekennzeichnet, dass** durch die Antriebsstrangsteuerung (28)
- geprüft wird, ob die gemittelte Getriebedrehzahl über einer Nullschwelle liegt, und wenn dies zutrifft,
- geprüft wird, ob die gemittelte Getriebedrehzahl größer oder gleich einer gemittelten Motordrehzahl zuzüglich eines Offsets ist,
- dass dann geprüft wird, ob das Motordrehmoment über einer Zugmomentschwelle liegt, und wenn dies zutrifft, dass
- erkannt wird, dass das Kraftfahrzeug in der falschen Fahrtrichtung rollt.

10. Steuerung nach Anspruch 6, **dadurch gekennzeichnet, dass** die Antriebsstrangsteuerung (28) eine in der Getriebesteuerung (7) enthaltene Richtungsüberwachung aufweist, deren gespeicherte Informationen von Steuereinrichtungen (3, 7) des Antriebsstrangs (1) verwertet werden.

## Claims

1. Method for controlling a motor vehicle drive train which includes an engine, an engine controller, a gearbox, a gearbox controller and an automatically actuated clutch,
- wherein the engine and gearbox speeds are recorded during a crawling phase of operation of the motor vehicle and the speeds of the engine and the gearbox are compared,
**characterised in that**
- the engine torque is recorded
- and that the rolling direction of the motor vehicle is determined exclusively from this data.

2. Method according to claim 1, **characterised in that** at the latest after an increase in the gearbox speed over the engine speed has been detected,
- when an engine overrun torque occurs, a correct rolling direction is identified which corresponds to the direction of travel provided by the gearbox controller, and
- when an engine traction torque is maintained, a wrong rolling direction is identified which is opposite to the direction of travel provided by the gearbox controller.

3. Method according to claim 2, **characterised in that** the rolling direction is identified at the latest after an increase in the gearbox speed over the engine speed plus an offset has been detected.

4. Method according to claim 1, **characterised in that**
- a check is made to determine whether the averaged gearbox speed lies above a zero threshold, and if this applies,
- a check is made to determine whether the averaged gearbox speed is greater than or equal to an averaged engine speed plus an offset,
- a check is then made to determine whether the engine torque lies above a traction torque threshold, and if this applies,
- it is detected that the motor vehicle is rolling in the wrong direction of travel.

5. Method according to claim 1, **characterised in that**
- a check is made to determine whether the averaged gearbox speed lies above a zero threshold, and if this applies,
- a check is made to determine whether the averaged gearbox speed is greater than or equal to an averaged engine speed,
- a check is then made to determine whether the engine torque lies above a traction torque threshold, and if this does not apply,
- a check is made to determine whether the engine torque lies below an overrun torque threshold, and if this does not apply,
- it is signalled that the rolling direction has not been detected.

6. Method according to claim 1, **characterised in that**
- a check is made to determine whether the averaged gearbox speed lies above a zero threshold, and if this applies,
- a check is made to determine whether the averaged gearbox speed is greater than or equal to an averaged engine speed plus an offset,
- a check is then made to determine whether the engine torque lies above a traction torque threshold, and if this does not apply,
- a check is made to determine whether the engine torque lies below an overrun torque threshold, and if this applies,
- it is detected that the motor vehicle is rolling in the right direction of travel.

7. Method according to claim 1, **characterised in that**
- a check is made to determine whether the averaged gearbox speed lies above a zero threshold, and if this applies,
- a check is made to determine whether the averaged gearbox speed is greater than or equal to an averaged engine speed,
- a check is then made to determine whether the engine torque lies above a traction torque threshold, and if this does not apply,
- a check is made to determine whether the engine torque lies below an overrun torque threshold, and if this does not apply,
- it is signalled that the rolling direction has not been detected.

8. Controller (1) for the drive train of a motor vehicle having an engine, a gearbox and an automatically actuated clutch, which controller is provided with
- an engine controller (2) by means of which the variables influencing the torque of the engine are controlled,
- a gearbox controller (3) by means of which the gear changes of the automatic gearbox are controlled and which exchanges data with the engine controller (2), and
- speed sensors for recording engine and gearbox speeds,
**characterised in that**
- it has a starting and gear change element (6) by means of which a crawling movement of the motor vehicle is controlled and by which the rolling direction of the motor vehicle is determined exclusively on the basis of the engine torque and of comparisons of the engine speed and the gearbox speed.

9. Controller according to claim 8, **characterised in that** the drive train controller (28)
- checks whether the averaged gearbox speed lies above a zero threshold, and if this applies,
- checks whether the averaged gearbox speed is greater than or equal to an averaged engine speed plus an offset,
- then checks whether the engine torque lies above a traction torque threshold, and if this applies,
- detects that the motor vehicle is rolling in the wrong direction of travel.

10. Controller according to claim 6, **characterised in that** the drive train controller (28) has a direction monitoring means which is contained in the gearbox controller (7) and whose stored information is evaluated by control devices (3, 7) of the drive train (1).

## Revendications

1. Procédé de commande d'une ligne de transmission d'un véhicule à moteur, laquelle comporte un moteur, une commande de moteur, une boîte de vitesses, une commande de boîte de vitesses et un embrayage actionné automatiquement,
- dans lequel procédé, pendant un déplacement du véhicule à vitesse lente, les vitesses de rotation du moteur et de la boîte de vitesses sont détectées et les vitesses de rotation du moteur et de la boîte de vitesses sont comparées,
**caractérisé**
- **en ce que** le couple de rotation du moteur est enregistré
- et **en ce que** le sens de roulement du véhicule est déterminé uniquement à partir de ces données.

2. Procédé selon la revendication 1, **caractérisé en ce que**, au plus tard après qu'une augmentation de la vitesse de rotation de la boîte de vitesses au-dessus de la vitesse de rotation du moteur ait été détectée,
- un bon sens de roulement, qui correspond à la direction de déplacement prévue par la commande de boîte de vitesses, est détecté au moment du développement d'un couple de poussée du moteur, et
- un mauvais sens de roulement, qui est opposé à la direction de déplacement prévue par la commande de boîte de vitesses, est détecté lorsqu'un couple de traction du moteur est maintenu.

3. Procédé selon la revendication 2, **caractérisé en ce que** le sens de roulement est détecté au plus tard après qu'une augmentation de la vitesse de rotation de la boîte de vitesses au-dessus du régime du moteur et, en plus, un décalage aient été détectés.

4. Procédé selon la revendication 1, **caractérisé**
- **en ce qu'**il est contrôlé si la vitesse de rotation moyennée de la boîte de vitesses se situe au-dessus d'un seuil zéro, et si c'est le cas,
- il est contrôlé si la vitesse de rotation moyennée de la boîte de vitesses est supérieure ou égale à une vitesse de rotation moyennée du moteur et, en plus, à un décalage,
- **en ce qu'**il est alors contrôlé si le couple de rotation du moteur se situe au-dessus d'un seuil de couple de traction, et si c'est le cas,
- il est alors détecté que le véhicule roule dans le mauvais sens de déplacement.

5. Procédé selon la revendication 1, **caractérisé**
- **en ce qu'**il est contrôlé si la vitesse de rotation moyennée de la boîte de vitesses se situe au-dessus d'un seuil zéro, et si c'est le cas,
- **en ce qu'**il est contrôlé si la vitesse de rotation moyennée de la boîte de vitesses est supérieure ou égale à une vitesse de rotation moyennée du moteur,
- **en ce qu'**il est alors contrôlé si le couple de rotation du moteur se situe au-dessus d'un seuil de couple de traction, et si ce n'est pas le cas,
- **en ce qu'**il est alors contrôlé si le couple de rotation du moteur se situe au-dessous d'un seuil de couple de poussée, et si ce n'est pas le cas,
- il est alors signalé que le sens de roulement n'a pas été détecté.

6. Procédé selon la revendication 1, **caractérisé**
- **en ce qu'**il est contrôlé si la vitesse de rotation moyennée de la boîte de vitesses se situe au-dessus d'un seuil zéro, et si c'est le cas,
- il est contrôlé si la vitesse de rotation moyennée de la boîte de vitesses est supérieure ou égale à une vitesse de rotation moyennée du moteur et, en plus, à un décalage,
- **en ce qu'**il est alors contrôlé si le couple de rotation du moteur se situe au-dessus d'un seuil de couple de traction, et si ce n'est pas le cas,
- **en ce qu'**il est contrôlé si le couple de rotation du moteur se situe au-dessous d'un seuil de couple de poussée, et si c'est le cas,
- il est alors détecté que le véhicule roule dans le bon sens de déplacement.

7. Procédé selon la revendication 1, **caractérisé**
- **en ce qu'**il est contrôlé si la vitesse de rotation moyennée de la boîte de vitesses se situe au-dessus d'un seuil zéro, et si c'est le cas,
- **en ce qu'**il est contrôlé si la vitesse de rotation moyennée de la boîte de vitesses est supérieure ou égale à une vitesse de rotation moyennée du moteur,
- **en ce qu'**il est alors contrôlé si le couple de rotation du moteur se situe au-dessus d'un seuil de couple de traction, et si ce n'est pas le cas,
- **en ce qu'**il est contrôlé si le couple de rotation du moteur se situe au-dessous d'un seuil de couple de poussée, et si ce n'est pas le cas,
- il est alors signalé que le sens de roulement n'a pas été détecté.

8. Commande (1) pour la ligne de transmission d'un véhicule à moteur, laquelle comporte un moteur, une boîte de vitesses et un embrayage actionné automatiquement, laquelle commande comporte :
- une commande de moteur (2), qui commande les grandeurs influençant le couple de rotation du moteur,
- une commande de boîte de vitesses (3), qui commande les passages de rapport de vitesse de la boîte de vitesses automatique et qui échange des données avec la commande de moteur (2), et
- des capteurs de vitesse de rotation pour détecter la vitesse de rotation du moteur et la vitesse de rotation de la boîte de vitesses,
**caractérisée en ce que**
- elle comporte un élément de démarrage et de passage de vitesses (6), par lequel est commandé un déplacement du véhicule en vitesse lente et par lequel le sens de roulement du véhicule est détecté exclusivement à l'appui du couple de rotation du moteur et des comparaisons entre le régime du moteur et la vitesse de rotation de la boîte de vitesses.

9. Commande selon la revendication 8, **caractérisée en ce que** par l'intermédiaire de la commande de ligne de transmission (28)
- il est contrôlé si la vitesse de rotation moyennée de la boîte de vitesses se situe au-dessus d'un seuil zéro, et si c'est le cas,
- il est contrôlé si la vitesse de rotation moyennée de la boîte de vitesses est supérieure ou égale à une vitesse de rotation moyennée du moteur et, en plus, à un décalage,
- **en ce qu'**il est alors contrôlé si le couple de rotation du moteur se situe au-dessus d'un seuil de couple de traction, et si c'est le cas,
- **en ce qu'**il est détecté que le véhicule roule dans le mauvais sens de déplacement.

10. Commande selon la revendication 8, **caractérisée en ce que** la commande de ligne de transmission (28) comporte un système de contrôle du sens de déplacement, qui est contenu dans la commande de boîte de vitesses (7) et dont les informations stockées en mémoire sont analysées par les dispositifs de commande (3, 7) de la ligne de transmission (1).
